## Europäisches Patentamt
## European Patent Office
## Office européen des brevets

(19)

(11) Veröffentlichungsnummer: **0 299 908**
**B1**

(12) **EUROPÄISCHE PATENTSCHRIFT**

(45) Veröffentlichungstag der Patentschrift:
03.10.90

(51) Int. Cl.⁵: **H02K 9/18**

(21) Anmeldenummer: **88730151.3**

(22) Anmeldetag: **05.07.88**

(54) **Elektrische Maschine mit geschlossenem Kühlkreislauf.**

(30) Priorität: **17.07.87 DE 3724186**

(43) Veröffentlichungstag der Anmeldung:
**18.01.89 Patentblatt 89/3**

(45) Bekanntmachung des Hinweises auf die Patenterteilung:
**03.10.90 Patentblatt 90/40**

(84) Benannte Vertragsstaaten:
**AT BE CH DE FR GB IT LI NL SE**

(56) Entgegenhaltungen:
**DE-A- 2 854 712**
**DE-B- 1 058 619**
**US-A- 2 650 313**

**PATENT ABSTRACTS OF JAPAN, Band 8,**
**Nr. 161 (E257)(1598), 26 Juli 1984, Seite 152 E 257 &**
**JP-A-59 61 448**

(73) Patentinhaber: **Siemens Aktiengesellschaft,**
**Wittelsbacherplatz 2, D-8000 München 2(DE)**

(72) Erfinder: **Kleinhans, Siegfried, Rieppelstrasse 5,**
**D-1000 Berlin 13(DE)**

ACTORUM AG

## Beschreibung

Die Erfindung betrifft eine elektrische Maschine mit geschlossenem Kühlkreislauf eines gasförmigen Kühlmittels, das mit Hilfe von Trennwänden und Leitflächen, die einen Teil der gegenüber liegenden, stirnseitigen axialen Durchtrittsflächen für das Kühlgas sperren und das Kühlgas in Teilkühlgasströmen mit entgegengesetzter Stromrichtung unterteilen, zu mindestens zwei Wärmetauschern geführt ist, wobei das Kühlgas radial aus der Mantelfläche des Ständerblechpakets der Maschine austritt und die beiden Wärmetauscher jeweils auf der Ober- und/oder Unterseite der Maschine senkrecht zu deren Längsachse angeordnet sind.

Eine derartige elektrische Maschine ist aus der DE-B 1 058 619 bekannt. Bei dieser sind, um den Nachteil zu vermeiden, daß bei Ausfall eines Wärmetauschers (Kühlers) eine Hälfte der Maschine nicht oder nur wesentlich schwächer gekühlt wird, längs des Umfanges des Ständerblechpaketes mehrere voneinander durch Trennwände abgeteilte Kühlkanäle vorgesehen, die jeweils an einer Stirnseite des Ständerblechpaketes durch eine Trennplatte verschlossen sind, während auf der anderen Stirnseite eine Verbindung des Kühlkanals zu den Rückleitungen gegeben ist, die jeweils zu einem der beiden Wärmetauschern führen. Benachbarte Kühlkanäle werden also jeweils in entgegengesetzter Richtung von Kühlluftströmen durchflossen und über unterschiedliche Wärmetauscher zurückgekühlt. Somit ist am Außenumfang des Ständerblechpaketes eine strenge Trennung zwischen den einzelnen Kühlluftströmen gegeben und auch die Vermischung der Kühlluft findet dort statt, da die jeweils von unterschiedlichen Wärmetauschern herkommende Kühlluft durch Eintritt in einen gleichen Kühlkanal gemischt wieder nur einem Wärmetauscher zugeführt wird.

Weiterhin ist aus der DE-A 2 854 712 eine elektrische Maschine bekannt, die wahlweise entweder mit einem offenen oder mit einem geschlossenen Kühlkreislauf betrieben wird. Dazu sind benachbart zu den Wärmetauschern (Rückkühlern) Klappen angeordnet, die bewegbar sind. In der einen Lage ermöglichen die Klappen einen geschlossenen Kühlkreislauf der Maschine in Verbindung mit einer Luftführungshaube, der als Normalfall angesehen wird und voraussetzt, daß beide Kühler in Betrieb sind. In der anderen Lage stellen die Klappen dagegen bei Notbetrieb eine Öffnung zur Außenluft her, so daß dann einerseits von außen angesaugte Kühlluft in die Maschine geleitet und andererseits nach Durchtritt wieder ins Freie abgeleitet wird. Dadurch wird sowohl die Schutzart als auch die Kühlart der Maschine geändert. In einer dritten Lage kann der Wärmetauscher durch die Klappen ganz von dem Kühlluftstrom abgetrennt werden.

Es ist ferner aus der DE-AS 2 724 422 bekannt, durch Vorsehung von zwei separaten, gleichartigen Wärmetauschern, die nebeneinanderliegend zur Längsachse der elektrischen Maschine angeordnet sind, zumindest den sehr kurzzeitigen Ausfall eines Wärmetauschers zuzulassen, um zumindest Inspektionsarbeiten während des Betriebes durchführen zu können. Bei einer Störung oder für länger andauernde Wartungsarbeiten auch an nur einem Wärmetauscher war bisher jedoch eine Abschaltung der Maschine notwendig, weil ein Wärmetauscher allein nur etwa eine Hälfte der von der Maschine erwärmten Kühlluft erfassen kann und dabei jeweils die andere Hälfte der Maschine ungekühlt läßt.

Der vorliegenden Erfindung liegt ebenfalls die Aufgabe zugrunde, bei einer elektrischen Maschine mit auf deren Ober- oder Unterseite angeordneten Wärmetauschern mit Hilfe von Trennwänden und Leitflächen eine Führung für das Kühlgas zu schaffen, die eine gleichmäßige Kühlung auch bei Ausfall eines Wärmetauschers erzielt.

Zur Lösung dieser Aufgabe liegen bei einer elektrischen, Maschine der eingangs beschriebenen Art gemäß der Erfindung die Leitflächen benachbart zu den Wärmetauschern und sperren dort die stirnseitigen axialen Durchtrittsflächen für das Kühlgas jeweils einseitig zur Hälfte. Die Anzahl der durch die Leitflächen hervorgerufenen entgegengesetzt durchströmten Kühlgasströme entspricht der Anzahl der vorhandenen Wärmetauscher, weil sich die Leitflächen in unmittelbarer Nachbarschaft zum Wärmetauscher befinden. Dies ergibt einen einfachen Aufbau des geschlossenen Kühlkreislaufes.

Ohne die Leitflächen und die mit ihnen bewirkte halbseitige Sperrung der axialen stirnseitigen Durchtrittsflächen würde das aus der vertikalen Kühlgasdurchtrittsfläche austretende Kühlgas jeweils in zwei den Stirnseiten zugeordnete Halbströme geteilt jeweils über die volle Breite der axialen Durchtrittsflächen zu den Stirnseiten der elektrischen Maschine gelangen und von dort wieder hauptsächlich axial in den elektrisch aktiven Teil der elektrischen Maschine eintreten. Durch die mittels der Leitflächen erfolgte halbseitige Sperrung der axialen stirnseitigen Durchtrittsflächen ist die vertikale Kühlgasdurchtrittsfläche in zwei Hälften aufgeteilt, die seitlich neben der Längsachse der elektrischen Maschine liegen und in denen das Kühlgas nebeneinander in entgegengesetzter Richtung zu der der Sperrung gegenüberliegenden axialen Durchtrittsfläche an den Stirnseiten des Ständerblechpakets strömt.

Dabei tritt an den Grenzen der entgegengesetzt fließenden Teilkühlgasströme eine Verwirbelung auf, die nach Überwindung der anderen sperrenden Leitfläche eine Verteilung des jeweiligen halben Kühlgasstrom über die gesamten axialen stirnseitigen Kühlgasdurchtrittsflächen bewirkt.

Durch diese seitlich zur Längsachse orientierte Einteilung des radial aus dem Ständerblechpaket austretenden Kühlgases und seine Verwirbelung sowie teilweise diagonale Überleitung auf die jeweils auf der anderen Seite der Längsachse liegende Seite der elektrischen Maschine ist es in vorteilhafter Weise ermöglicht, den Kühlgasstrom bei mehreren Umläufen im Kühlkreislauf gleichmäßig auf das gesamte zu kühlende Volumen der elektrischen Maschine und abwechselnd auf die beiden Wärmetauscher zu verteilen. Dadurch ist auch bei Ausfall eines der beiden senkrecht zur Längsachse der Maschine angeordneten Wärmetauscher eine gleichmäßige, wenn auch schwächere Kühlwirkung, des gesamten umlaufenden Kühlgasvolumens erzielt.

Dies vermeidet örtliche Überhitzungen der elektrischen Maschine, und der Betrieb kann zumindest bei Ausfall eines der Wärmetauschers mit verminderter Leistung aufrecht erhalten werden.

Es ist vorteilhaft, die Leitflächen klappbar auszuführen. Zumindest bei Ausfall oder bei Abschaltung eines der Wärmetauscher sind die Leitflächen in die zur Kühlgasverteilung vorgesehene Stellung geklappt und bewirken eine gleichmäßige Kühlung der elektrischen Maschine auch mit nur einem in Betrieb befindlichen Wärmetauscher. Dagegen können bei normalem, störungsfreiem Betrieb beider Wärmetauscher die zur Verteilung des Kühlgasstromes vorgesehenen Leitflächen an die Gehäusewände geklappt werden, so daß für den Normalbetrieb zusätzliche, durch die Leitflächen verursachte Strömungsverluste vermieden sind und dadurch der Durchsatz des sekundären Kühlmittels reduziert sein kann.

Es ist zweckmäßig, daß die Wärmetauscher in axialer Richtung neben dem Ständerblechpaket angeordnet sind und die Leitflächen zwischen der Mantelfläche des Ständerblechpakets und den Kühlgasdurchtrittsflächen der Wärmetauscher liegen. Dadurch kann die gesamte Bauhöhe der elektrischen Maschine klein gehalten werden und zugleich eine Zugangsmöglichkeit zu den Wärmetauschern von den Stirnseiten her geschaffen werden, was für bestimmte Anwendungsfälle vorteilhaft sein kann. Bei dieser Anordnung der Wärmetauscher neben dem Ständerblechpaket empfiehlt es sich, schrägstehende, von der Stirnwand des Ständerblechpakets zur Deckfläche des Gehäuses reichende Leitflächen vorzusehen. Dadurch wird eine einfache Anpassung der Leitflächen an den zur Verfügung stehenden Raum zwischen Ständerblechpaket und Deckfläche des Gehäuses sowie an die Durchtrittsflächen der Wärmetauscher mittels geometrisch einfach geformter, plattenförmiger Leitflächen geschaffen.

Es kann weiterhin vorteilhaft sein, daß treppenförmige Leitflächen mit auf der halben Höhe der Kühlgasdurchtrittsflächen der Wärmetauscher liegenden horizontalen Teilflächen vorgesehen sind, deren axiale Länge der halben Länge des Ständerblechpakets der elektrischen Maschine entspricht, wobei eine vertikale Teilfläche von der jeweils einem Wärmetauscher zugewandten Kante der horizontalen Teilfläche jeder Leitfläche zur Stirnwand des Ständerblechpakets und die jeweils andere vertikale Teilfläche von der jeweils einem Wärmetauscher abgewandten Kante der horizontalen Teilfläche jeder Leitfläche zur Deckfläche des Gehäuses verläuft.

Mit dieser Anordnung erfolgt ebenfalls eine halbseitige Sperrung und Verwirbelung und damit teilweise Überleitung des durch die vertikale Kühlgasdurchtrittsfläche hindurchtretenden Kühlgases auf die gesamte Breite der stirnseitigen axialen Durchtrittsflächen ähnlich zu der Anordnung mit schrägen Leitflächen. Die Leitflächen bestehen hier aber jeweils aus zwei vertikalen und einer horizontalen Teilfläche, die rechtwinklig aufeinander stehen. Dabei liegen die jeweils von den horizontalen Teilflächen abwärts gerichteten vertikalen Teilflächen jeweils in einer unteren seitlichen Hälfte der halbseitigen axialen Durchtrittsflächen einander diagonal dicht vor den Wärmetauschern gegenüber. Die beiden von den horizontalen Teilflächen vertikal nach oben gerichteten Teilflächen liegen dagegen unmittelbar nebeneinander in der Mitte der oberen Hälfte des Raumes über der vertikalen Kühlgasdurchtrittsfläche und sperren diesen Raum in axialer Richtung auf halber Höhe von der Deckfläche des Gehäuses her.

Dadurch überdecken die jeder Hälfte der vertikalen Kühlgasdurchtrittsfläche der elektrischen Maschine zugeordneten Leitflächen jeweils nur etwa ein Viertel der insgesamt zur Verfügung stehenden vertikalen Kühlgasdurchtrittsfläche. Der Raum oberhalb des vertikalen Kühlgasdurchtritts für das Kühlgas reicht damit zum Teil bis an die Deckflächen des Gehäuses, so daß dadurch Strömungsverluste in axialer Richtung verringert sind und die Kühlwirkung der axial neben dem Ständerblechpaket angeordneten Wärmetauscher erhöht ist.

Es ist möglich, die Wärmetauscher in der vertikalen Kühlgasdurchtrittsfläche der elektrischen Maschine nebeneinander liegend anzuordnen. Dazu empfiehlt sich, daß vertikal stehende, S-förmige Leitflächen die Kühlgasdurchtrittsfläche beider Wärmetauscher in axialer Richtung halbieren. Durch diese Anordnung der Wärmetauscher ist die axiale Ausdehnung des oberen Teilbereichs der Maschine verkleinert und eine kompaktere Bauweise ermöglicht. Für den Fall, daß der Kühlgasaustritt aus dem Ständerblechpaket unmittelbar in die Wärmetauscher erfolgt, ist eine sofortige Abkühlung des Kühlgases und eine Verringerung der Aufheizung des Gehäuses und damit der Umgebung sowie eine Verbesserung der Schallisolation ermöglicht. Außerdem können für die Sekundärkühlung der Wärmetauscher vorgesehene Rohrleitungen mit geringer Länge ausgeführt sein.

Durch die vertikalen, S-förmigen Leitflächen ist auch bei dieser Anordnung der Wärmetauscher bei Ausfall eines Wärmetauschers eine gleichmäßige Kühlung der gesamten elektrischen Maschine gewährleistet. Zusätzlich empfiehlt es sich, daß die vertikal stehenden, S-förmigen Leitflächen von der Kühlgasdurchtrittsfläche der Wärmetauscher bis zur Deckfläche des Gehäuses reichen. Dadurch können Querströmungen zu den mit den Leitflächen erzielten, axialen Strömungen des Kühlgases im zu den Wärmetauschern benachbarten Bereich vermieden und eine bessere Ausnutzung des Kühlgasvolumens bei zugleich niedriger Bauhöhe der Maschine erreicht werden.

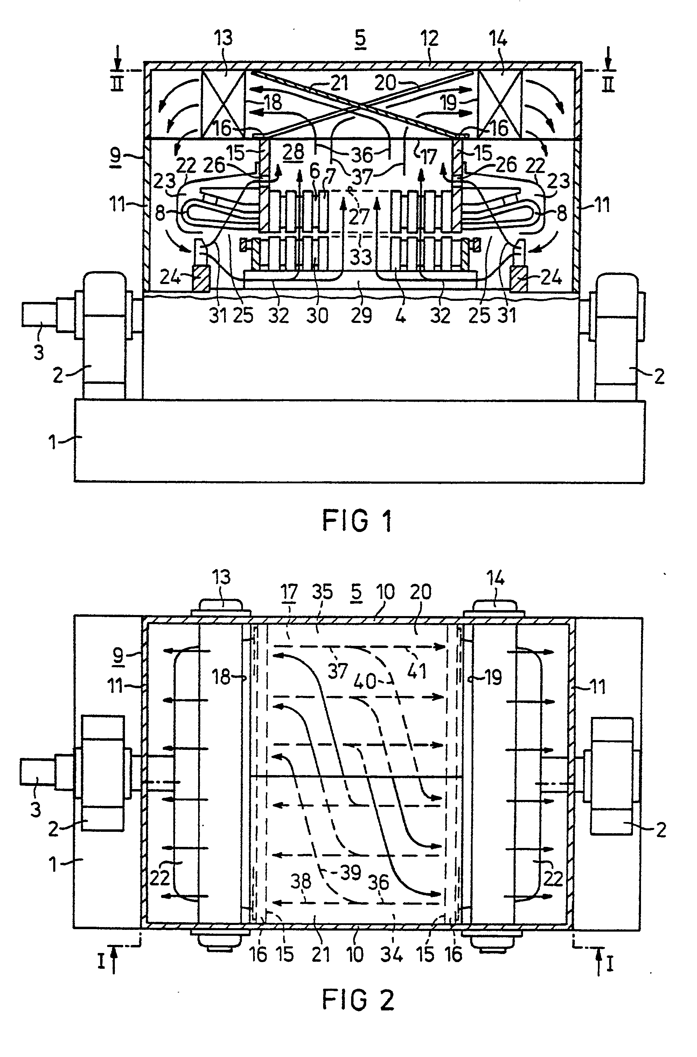

Im folgenden sei die Erfindung noch an Hand der in den Fig. 1 bis 6 der Zeichnung dargestellten Ausführungsbeispiele näher erläutert.

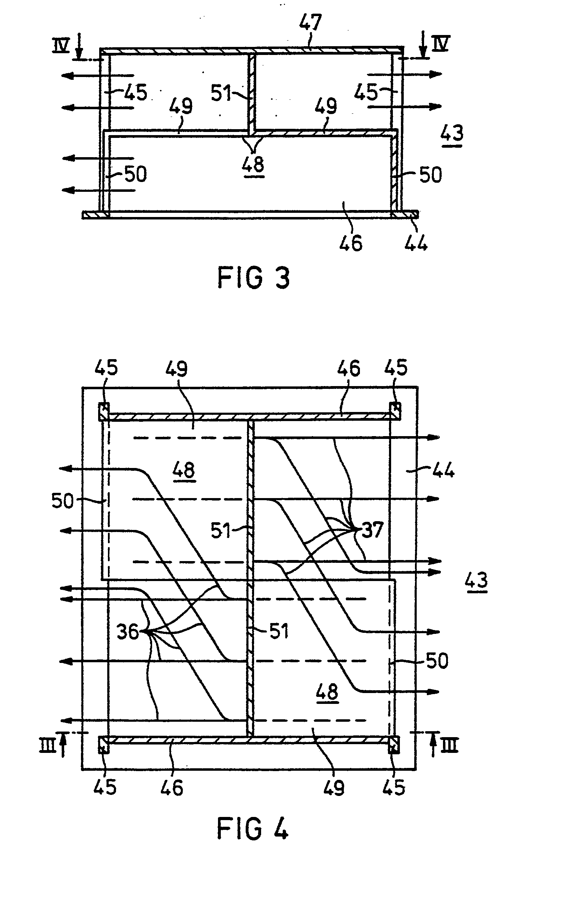

In den Fig. 1 und 2 ist eine elektrische Maschine in teilweise geschnittener Darstellung in Seitenansicht und in Draufsicht dargestellt, bei der die Wärmetauscher in axialer Richtung neben dem Ständerblechpaket angeordnet sind. Die Fig. 3 und 4 zeigen ein anderes Ausführungsbeispiel mit in axialer Richtung neben dem Ständerblechpaket angeordneten Wärmetauschern, wobei Fig. 4 die Draufsicht einer als separater Bauteil ausgeführten Kühlgasverteilungshaube mit darin liegenden Leitflächen darstellt und Fig. 3 einen Schnitt entlang der Linie III - III in Fig. 4 zeigt.

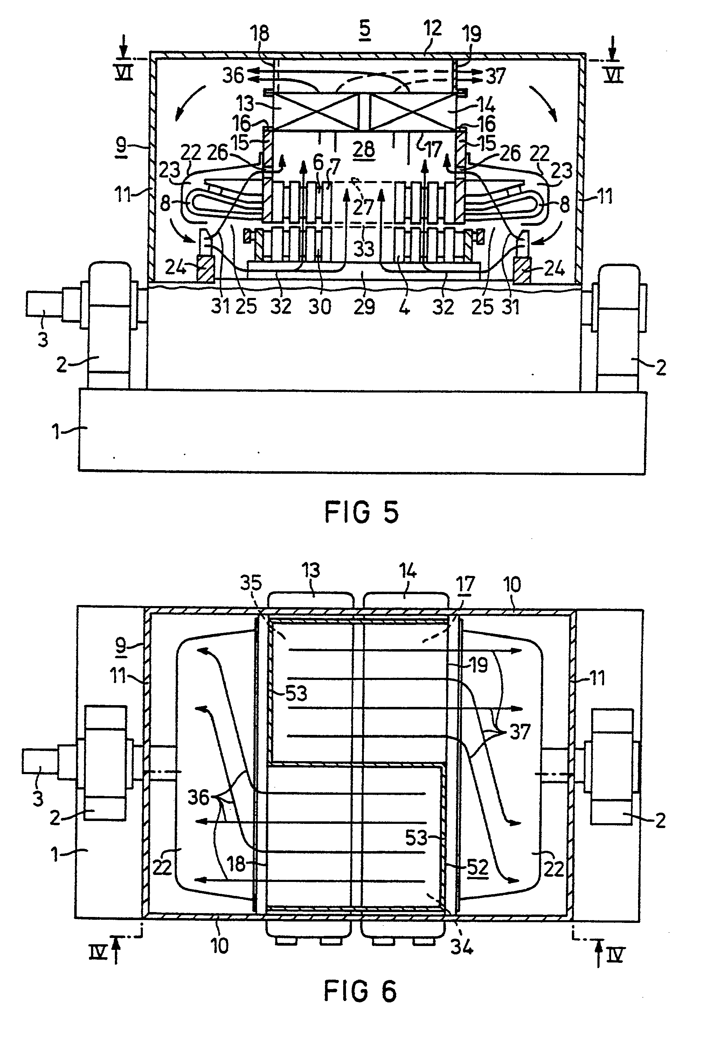

In den Fig. 5 und 6 ist eine weitere elektrische Maschine mit nebeneinander in der vertikalen Kühlgasdurchtrittsfläche der elektrischen Maschine angeordneten Wärmetauschern ebenfalls in teilweise geschnittener Darstellung in Seitenansicht und Draufsicht gezeigt.

Das Ausführungsbeispiel nach den Fig. 1 und 2 betrifft eine elektrische Maschine, insbesondere einen Motor großer Leistung, mit geschlossenem Kühlkreislauf, die auf einer Grundplatte 1 steht. Die Grundplatte 1 trägt außerdem die Lager 2 für die Welle 3 des Läufers 4 und den Ständer 5. Dieser besteht aus dem von radialen Ständerkühlkanälen 6 durchzogenen Ständerblechpaket 7, der Ständerwicklung mit Wickelköpfen 8, und dem Gehäuse 9. Das Gehäuse 9 ist aus den Seitenwänden 10, den Stirnwänden 11 und der oberen Deckfläche 12 gebildet. Es ist geschlossen ausgeführt und begrenzt den Innenraum, in dem der Kühlgasstrom umläuft. Unterhalb der Deckfläche 12 sind auf der Oberseite der elektrischen Maschine Wärmetauscher 13, 14 angeordnet, die in axialer Richtung neben dem Ständerblechpaket 7 liegen.

An den Stirnseiten des Ständerblechpakets 7 sind Trennwände 15 angeordnet, die sich, abgesehen von der Oberseite der Maschine, bis zu den Seitenwänden 10 und auf der Unterseite bis zur Grundplatte 1 erstrecken. Die Oberkanten 16 der Trennwände 15 verlaufen parallel zur Deckfläche 12 und weisen zu dieser einen der Höhe der Wärmetauscher 13, 14 entsprechenden Abstand auf. Diese Oberkanten 16 und die beiden senkrecht zu den Trennwänden stehenden Seitenwände 10 des Gehäuses 9 begrenzen die vertikale Kühlgasdurchtrittsfläche 17, durch welche das gesamte erwärmte Kühlgas den Wärmetauschern 13, 14 zugeführt ist, wobei dieses auf die in deren Eintrittsflächen liegenden axialen Kühlgasdurchtrittsflächen 18, 19 umgeleitet ist. Die axialen Kühlgasdurchtrittsflächen 18, 19 haben die Höhe der Wärmetauscher 13, 14 und die Breite der Oberkanten 16 der Trennwände 15.

In dem Raum zwischen der vertikalen Kühlgasdurchtrittsfläche 17 und den beiden axialen Kühlgasdurchtrittsflächen 18, 19 mit den Wärmetauschern 13, 14 sind Leitflächen 20, 21 angeordnet, deren Breite der halben Breite der Oberkanten 16 der Trennwände 15 entspricht. Die Leitflächen 20, 21 sind seitlich zur Längsachse der elektrischen Maschine nebeneinander mit entgegengesetzter Neigung angeordnet und verlaufen schräg jeweils von den Oberkanten 16 der Trennwände 15 zur oberen Deckfläche 12 des Gehäuses 9. Dadurch sperren sie jeweils halbseitig den Zugang zu den axialen Kühlgasdurchtrittsflächen 18, 19. Eine solche Anordnung der Wärmetauscher 13, 14 mit den Leitflächen 20, 21 ist ebenso auf der Unterseite der elektrischen Maschine möglich.

Die Wickelköpfe 8 sind von Leithauben 22 abgedeckt und begrenzen den Wickelkopfraum 23 an den Stirnseiten der elektrischen Maschine. Die Leithauben 22 sind radial von den Trennwänden 15 bis zu auf der Welle 3 beidseitig angebrachten Axiallüftern 24 geführt und weisen jeweils benachbart zu diesen einen Ringspalt 25 auf. In den Trennwänden 15 sind am Umfang verteilte Durchbrüche 26 vorgesehen, welche die Wickelkopfräume 23 mit dem durch die Mantelfläche 27 des Ständerblechpakets 7, den Trennwänden 15 und dem Gehäuse 9 begrenzten Warmgasraum 28 verbinden. Im Inneren des Läufers 4 ist die Welle 3 von axialen Rohrkanälen 29 umgeben, die mit im Läuferblechpaket vorgesehenen, radialen Läuferkühlkanälen 30 verbunden sind.

Das von den Wärmetauschern 13, 14 rückgekühlte Kühlgas ist um die Leithauben 22 herum zu den Axiallüftern 24 geführt. Von den Axiallüftern 24 ist jeweils ein durch Pfeile angedeuteter Teilkühlgasstrom 31 über die Wickelköpfe geleitet und tritt nach deren Kühlung über die Durchtrittsöffnungen 26 in den Trennwänden 15 in den Warmgasraum 28 ein. Der ebenfalls durch Pfeile angedeutete, wesentlich größere Teilkühlgasstrom 32 durch die Blechpakete durchströmt die axialen Rohrkanäle 29 und tritt unterstützt durch die Eigenlüfterwirkung des Läufers 4 in dessen radiale Läuferkühlkanäle 30 ein. Von diesen gelangt er dann über den Gasspalt 33 in die radialen Ständerkühlkanäle 6.

Auf diese Weise ist die Verlustwärme aus dem Läufer 4 und dem Ständerblechpaket 7 abgeführt. Der Teilkühlgasstrom 32 tritt aus der Mantelfläche 27 des Ständerblechpakets 7 am Umfang verteilt aus und ist mit dem über die Wickelköpfe geleiteten Teilkühlgasstrom 31 im Warmgasraum 28 zusammengeführt. Das gesamte erwärmte Kühlgas ist danach tangential entlang der Mantelfläche 27 des Ständerblechpakets 7 innerhalb des Warmgasraumes 28 zur vertikalen Kühlgasdurchtrittsfläche 17 geführt und gelangt durch diese zu den Leitflächen 20,21.

Im folgenden sind die jeweiligen Teilkühlgasströme durch entsprechende Pfeile angedeutet. Die vertikale Kühlgasdurchtrittsfläche 17 ist in zwei den beiden Leitflächen 20, 21 zugeordnete Hälften 34, 35 geteilt, durch welche die Teilkühlgasströme 36, 37 hindurchtreten. Der durch die Hälfte 34 der vertikalen Kühlgasdurchtrittsfläche 17 hindurchtretende Teilkühlgasstrom 36 trifft auf die ihm zugeordnete Leitfläche 21 und ist hauptsächlich entlang dieser Leitfläche 21 zum Wärmetauscher 13 geführt.

Der durch die andere Hälfte 35 der vertikalen Kühlgasdurchtrittsfläche 17 tretende Teilkühlgasstrom 37 ist der Leitfläche 20 zugeordnet und ist von dieser in entgegengesetzter Richtung neben dem Teilkühlgasstrom 36 zum Wärmetauscher 14 hin umgeleitet.

Von den Leitflächen 20, 21 sind somit die beiden Teilkühlgas ströme 36, 37 nebeneinander in entgegengesetzter Richtung zu den gegenüberliegenden axialen Durchtrittsflächen 18, 19 geleitet, in denen die Wärmetauscher 13, 14 liegen.

An der Grenze der beiden Teilkühlgasströme 36, 37 erfolgt eine intensive Verwirbelung. Dabei gelangt ein Teilkühlgasstrom 39 des Teilkühlgasstromes 36 in den Raum oberhalb der entgegengesetzt geneigten Leitfläche 20 auf der anderen Seite der Längsachse der Maschine und tritt dort in den Wärmetauscher 13 ein. Der andere Teilkühlgasstrom 38 des Teilkühlgasstromes 36 ist nicht umgeleitet und kann auf direktem Wege durch den Wärmetauscher 13 gelangen. Der andere Teilkühlgasstrom 37 ist an der Grenze zum entgegengesetzt strömenden Teilkühlgasstrom 36 ebenfalls verwirbelt, so daß sein Teilkühlgasstrom 40 oberhalb der Leitfläche 21 auf die jenseits der Längsachse der Maschine liegende Seite zum Wärmetauscher 14 gelangt, während sein Teilkühlgasstrom 41 direkt durch diesen treten kann. Damit ist der gesamte Kühlgasstrom, der durch die vertikale Kühlgasdurchtrittsfläche 17 hindurchtritt, jeweils durcheinander gemischt auf die gesamte Breite beider Wärmetauscher 13, 14 verteilt.

Durch diese Verteilung und intensive Verwirbelung des Kühlgases ist eine ausreichende Kühlwirkung auch bei Ausfall eines der Wärmetauscher 13, 14 zumindest für einen Teillastbetrieb gewährleistet. Zusätzlich wäre es möglich, von vorherein durch Überdimensionierung der Wärmetauscher 13, 14 oder im Bedarfsfall durch Erhöhung des Durchsatzes mit dem Sekundärkühlmittel auch bei Ausfall eines Wärmetauschers 13, 14 eine Verbesserung der Kühlung für die gesamte Maschine zu erzielen.

Ein anderes Ausführungsbeispiel der Erfindung mit einer geänderten Anordnung der Leitflächen als separat ausgeführte Kühlgasverteilungshaube 43 ist in den Fig. 3 und 4 gezeigt.

Der zwischen den beiden Wärmetauschern 13, 14 liegende, von den Seitenwänden 10 und der Deckfläche 12 begrenzte Raum oberhalb der vertikalen Kühlgasdurchtrittsfläche 17 ist dabei als ein selbständiger Bauteil, nämlich als Kühlgasverteilungshaube 43 ausgeführt. Diese besteht aus dem Grundrahmen 44, den Stützen 45, den Seitenwänden 46, einem Segment 47 der Deckfläche 12 und treppenförmigen Leitflächen 48. Die Grundfläche der Luftverteilungshaube 43 entspricht dabei der vertikalen Kühlgasdurchtrittsfläche 17. Die Verteilung und Verwirbelung der aus deren beiden Hälften 34 und 35 tretenden Teilkühlgasströme 36, 37 ist analog zu der in dem in den Fig. 1 und 2 dargestellten Ausführungsbeispiel mit schräg stehenden Leitflächen 18, 19.

Die Leitflächen 48 sind jeweils aus treppenförmigen Teilflächen 49, 50, 51 zusammengesetzt, die rechtwinklig aufeinander stehen. Dabei liegen die jeweiligen horizontalen Teilflächen 49 auf der halben Höhe der axialen Kühlgasdurchtrittsflächen 18, 19 der nach dem Einbau der Kühlgasverteilungshaube 43 unmittelbar an diese angrenzenden, nicht dargestellten Wärmetauscher 13, 14. Die axiale Länge der horizontalen Teilflächen 49 entspricht der halben Länge der vertikalen Kühlgasdurchtrittsfläche 17 und damit der halben axialen Länge des Ständerblechpakets 7 der elektrischen Maschine. Die abwärts gerichteten vertikalen Teilflächen 50 sind jeweils den Wärmetauschern 13, 14 zugewandt und reichen von den jeweiligen horizontalen Teilflächen 49 nach unten zum Grundrahmen 44. Die von den Wärmetauschern 13, 14 abgewandten, aufwärts gerichteten vertikalen Teilflächen 51 reichen von der horizontalen Teilfläche 49 nach oben zum gegen den Grundrahmen 44 mit Hilfe der Stützen 45 getragenen Segment 47 der Deckfläche der Kühlgasverteilungshaube 43.

Durch diese Anordnung der Leitflächen 48 in einem separaten Bauteil kann ihre Montage einerseits getrennt vom Zusammenbau des Gehäuses der elektrischen Maschine erfolgen, und bei Wartungen ist eine schnelle Demontage der Leitflächen 20, 21 möglich, in dem die komplette Luftverteilungshaube 43 abgehoben und somit ein schneller Zugang zum elektrisch aktiven Teil der elektrischen Maschine geschaffen wird. Bei dieser Ausführungsform der Kühlgasverteilungshaube 43 kann darüber hinaus die Kühlgasströmung bereits erheblich früher als bei schräg stehenden Leitflächen 20, 21 in den oberen Teil der Kühlgasverteilungshaube 43 gelangen, so daß das Kühlgas beim Eintritt in die Wärmetauscher 13, 14 bereits weitgehend laminar strömt und damit der Strömungswiderstand zusätzlich gesenkt ist.

Ein weiteres Ausführungsbeispiel der Erfindung zeigen die Fig. 5 und 6 mit einer geänderten Anordnung der Wärmetauscher 13, 14 bei gleichem Kühlkreislauf. Für gleiche Teile sind die gleichen Bezugszeichen wie für das in den Fig. 1 und 2 dargestellte Ausführungsbeispiel beibehalten.

Die senkrecht zur Maschinenlängsachse angeordneten Wärmetauscher 13, 14 liegen nebeneinander in der vertikalen Kühlgasdurchtrittsfläche 17 der elektrischen Maschine. Das aus der Mantelfläche 27 des Ständerblechpaketes 7 austretende erwärmte Kühlgas ist dadurch direkt zu den Wärmetauschern 13, 14 geführt und ist erst nach dem Durchtritt durch die Wärmetauscher 13, 14 von den Leitflächen 52 auf die axialen Kühlgasdurchtrittsflächen 18, 19 aufgeteilt.

Auf den Wärmetauschern 13, 14 sind die vertikal stehenden Leitflächen 52 angeordnet, welche die vertikale Kühlgas durchtrittsfläche 17 in axialer Richtung ebenfalls in die Teilflächen 34 und 35 halbieren. Die axialen Kühlgasdurchtrittsflächen 18, 19 sind durch die senkrecht zu der Längsachse der Maschine angeordneten Teilflächen 53 ähnlich wie im ersten Ausführungsbeispiel halbseitig abgesperrt. Das Kühlgas ist dadurch in zwei den Hälften 34, 35 der vertikalen Kühlgasdurchtrittsfläche 17 zugeordnete Teilkühlgasströme 36, 37 aufgeteilt, die jeweils durch die halbseitig gesperrten axialen Kühlgasdurchtrittsflächen 18, 19 hindurchtreten.

Dahinter befindet sich der Raum oberhalb der die Wickelköpfe 8 abdeckenden Leithauben 22, dessen Breite der gesamten Breite der axialen Kühlgasdurchtrittsflächen 18, 19 entspricht. Jeder Teilkühlgasstrom 36, 37 fächert sich also über diese gesamte Breite auf.

Bei Ausfall beispielsweise des Wärmetauschers 13 ist jeweils nur die halbe Menge der Teilkühlgasströme 36, 37 rückgekühlt. Da jeder Teilkühlgasstrom 36, 37 sich je doch auf die gesamte Maschinenbreite verteilt, ergibt sich während des Durchlaufs des Kühlgases durch die gesamte Maschine eine so gute Durchmischung des Kühlgases, daß sich insgesamt eine gleichmäßige Kühlwirkung einstellt. Bei den beschriebenen Ausführungsbeispielen ist als Kühlgas in der Regel Luft, in Ausnahmefällen Wasserstoff verwendet.

**Patentansprüche**

1. Elektrische Maschine mit geschlossenem Kühlkreislauf eines gasförmigen Kühlmittels, das mit Hilfe von Trennwänden (15) und Leitflächen (20, 21, 48, 52), die einen Teil der gegenüber liegenden, stirnseitigen axialen Durchtrittsflächen (18, 19) für das Kühlgas sperren und das Kühlgas in Teilkühlgasströme mit entgegengesetzter Stromrichtung unterteilen, zu mindestens zwei Wärmetauschern (13, 14) geführt ist, wobei das Kühlgas radial aus der Mantelfläche (27) des Ständerblechpakets (7) der Maschine austritt und die beiden Wärmetauscher (13, 14) jeweils auf der Ober- und/oder Unterseite der Maschine senkrecht zu deren Längsachse angeordnet sind, dadurch gekennzeichnet, daß die Leitflächen (20, 21, 48, 52) benachbart zu den Wärmetauschern (13, 14) liegen und dort die stirnseitigen axialen Durchtrittsflächen (18, 19) für das Kühlgas jeweils einseitig zur Hälfte sperren.

2. Elektrische Maschine nach Patentanspruch 1, **dadurch gekennzeichnet,** daß die Leitflächen (20), (21) klappbar ausgeführt sind.

3. Elektrische Maschine nach Patentanspruch 1 oder 2, **dadurch gekennzeichnet,** daß die Wärmetauscher (13), (14) in axialer Richtung neben dem Ständerblechpaket (7) angeordnet sind und die Leitflächen (20), (21), (48) zwischen der Mantelfläche (27) des Ständerblechpakets (7) und den Kühlgasdurchtrittsflächen der Wärmetauscher (13), (14) liegen.

4. Elektrische Maschine nach den Patentansprüchen 2 oder 3, **dadurch gekennzeichnet,** daß schrägstehende, von der Stirnwand des Ständerblechpakets (7) zur Deckfläche (12) des Gehäuses (9) reichende Leitflächen (20), (21) vorgesehen sind.

5. Elektrische Maschine nach Patentanspruch 3, **dadurch gekennzeichnet,** daß treppenförmige Leitflächen (48) mit auf der halben Höhe der Kühlgasdurchtrittsflächen der Wärmetauscher (13), (14) liegenden horizontalen Teilflächen (49) vorgesehen sind, deren axiale Länge der halben Länge des Ständerblechpakets (7) der elektrischen Maschine entspricht, wobei eine vertikale Teilfläche (50) von der jeweils einem Wärmetauscher (13), (14) zugewandten Kante der horizontalen Teilfläche (49) jeder Leitfläche (48) zur Stirnwand des Ständerblechpakets (7) und die andere vertikale Teilfläche (51) von der jeweils einem Wärmetauscher (13), (14) abgewandten Kante der horizontalen Teilfläche (49) jeder Leitfläche (48) zur Deckfläche (12) des Gehäuses (9) verläuft.

6. Elektrische Maschine nach Patentanspruch 1 oder 2, **dadurch gekennzeichnet,** daß die Wärmetauscher (13), (14) in der vertikalen Kühlgasdurchtrittsfläche (17) der elektrischen Maschine nebeneinander liegend angeordnet sind, und daß vertikal stehende, S-förmige Leitflächen (52) die Kühlgasdurchtrittsflächen beider Wärmetauscher (13), (14) in axialer Richtung halbieren.

7. Elektrische Maschine nach Patentanspruch 1 oder 2 und 6, **dadurch gekennzeichnet,** daß die vertikal stehenden, S-förmigen Leitflächen (52) von der Kühlgasdurchtrittsfläche der Wärmetauscher (13), (14) bis zur Deckfläche (12) des Gehäuses (9) reichen.

**Revendications**

1. Machine électrique à circuit de refroidissement autonome d'un milieu de refroidissement gazeux qui est envoyé à au moins deux échangeurs de chaleur (13, 14), à l'aide de parois de séparation (15) et de surfaces de guidage (20, 21, 48, 52) qui obturent pour le gaz de refroidissement une partie des surfaces de passages axialement frontales (18, 19) situées l'une en face de l'autre et qui subdivisent le gaz de refroidissement en des courants de refroidissement gazeux partiels, le gaz de refroidissement quittant radialement la surface latérale (27) du paquet de tôles statorique (7) de la machine et les deux échangeurs de chaleur (13, 14) étant respectivement disposés sur le côté supérieur et/ou sur le côté inférieur de la machine, perpendiculairement à l'axe longitudinal de celle-ci, caractérisée par le fait que les surfaces de guidage (20, 21, 48, 52) se situent dans le voisinage des échangeurs de chaleur (13, 14) et y obturent unilatéralement et par moitié les surfaces de passage (18, 19) axialement frontales pour le gaz de refroidissement.

2. Machine électrique selon la revendication 1, caractérisée par le fait que les surfaces de guidage (20), (21) sont réalisées de manière rabattable.

3. Machine électrique selon la revendication 1 ou 2, caractérisée par le fait que les échangeurs de chaleur (13), (14) sont disposés, en direction axiale, près du paquet de tôles statorique (7) et que les surfaces de guidage (20), (21), (48) sont situées entre la surface latérale (27) du paquet de tôles statorique et les surfaces de passage, pour le gaz de refroidissement, des échangeurs de chaleur (13), (14).

4. Machine électrique selon les revendications 2 ou 3, caractérisée par le fait que sont prévues des surfaces de guidage (20), (21) disposées obliquement et qui s'étendent depuis la paroi frontale du paquet de tôles statorique (7) jusqu'à la surface de recouvrement (12) du carter.

5. Machine électrique selon la revendication 3, caractérisée par le fait que sont prévues des surfaces de guidages (48) en forme d'escaliers, avec des surfaces partielles horizontales (49) situées à mi-hauteur des surfaces de passage, pour le gaz de refroidissement, des échangeurs de chaleur (13), (14), et dont la longueur axiale correspond à la moitié de la longueur du paquet de tôles statorique (7) de la machine électrique, la réalisation étant telle qu'une surface partielle verticale (50) s'étend depuis le bord de la surface partielle horizontale (49) de chaque surface de guidage (48), qui est voisin de l'un des échangeurs de chaleur (13), (14), jusqu'à la paroi frontal du paquet de tôles statorique (7) et que l'autre surface partielle verticale (51) s'étend depuis le bord de la surface partielle horizontale (49) de chaque surface de guidage (48), qui est éloigné de l'un des échangeurs de chaleur (13), (14),

jusqu'à la surface de recouvrement (12) du carter (9).

6. Machine électrique selon la revendication 1 ou 2, caractérisée par le fait que les échangeurs de chaleur (13), (14) sont disposés dans la surface verticale de passage du gaz de refroidissement (17) de manière à se situer l'un près de l'autre et que des surfaces de guidage verticales et en forme de S (52) divisent en deux, en direction axiale, les surfaces de passage du gaz de refroidissement des deux échangeurs de chaleur (13), (14).

7. Machine électrique selon la revendication 1 ou 2 et 6, caractérisée par le fait que les surfaces verticales de guidage en forme de S (52) s'étendent depuis la surface de passage du gaz de refroidissement des échangeurs de chaleur (13), (14) jusqu'à la surface de recouvrement (12) du carter (9).

**Claims**

1. An electric machine with closed cooling circuit of a gaseous cooling agent which with the aid of partition walls (15) and deflectors (20, 21, 48, 52) which block one part of the opposed end-face axial through-flow surfaces (18, 19) for the cooling gas, and divide the cooling gas into partial cooling gas currents with opposite flow directions, is guided to at least two heat exchangers (13, 14), wherein the cooling gas exits radially from the surface area (27) of the laminated stator core (7) of the machine and the two heat exchangers (13, 14) are arranged in each case on the upper and/or lower side of the machine perpendicular to the longitudinal axis thereof, characterised in that the deflectors (20, 21, 48, 52) lie adjacent to the heat exchangers (13, 14) and there the end-face axial through-flow surfaces (18, 19) for the cooling gas each block one half on one side.

2. An electric machine according to claim 1, characterised in the deflectors (20), (21) are designed so that they are hinged.

3. An electric machine according to claim 1 or 2, characterised in that the heat exchangers (13), (14) are arranged in the axial direction next to the laminated stator core (7) and the deflectors (20), (21), (48) lie between the surface area (27) of the laminated stator core (7) and the cooling gas throughflow surfaces of the heat exchangers (13), (14).

4. An electric machine according to claims 2 or 3, characterised in that inclined deflectors (20), (21) are provided extending from the end wall of the laminated stator core (7) to the cover face (12) of the housing (9).

5. An electric machine according to claim 3, characterised in that step-shaped deflectors (48) are provided with horizontal partial faces (49) lying at half the height of the cooling gas cross-over faces of the heat exchangers (13), (14), the axial length of which corresponds to half the length of the laminated stator core (7) of the electric machine, wherein a vertical partial face (50) extends from the edge of the horizontal partial face (49) of each conducting face (48) facing a respective heat exchanger (13), (14) to the end wall of the laminated stator core (7) and the other vertical partial face (51) extends from the edge of the horizontal partial face (49) of each conducting face (48) facing away from a respective heat exchanger (13), (14) to the cover face (12) of the housing (9).

6. An electric machine according to claim 1 or 2, characterised in that the heat exchangers (13), (14) are arranged lying next to each other in the vertical cooling gas through-flow surface (17) of the electric machine and in that the vertically standing, s-shaped deflectors (52) halve the cooling gas cross-over faces of both heat exchangers (13), (14) in the axial direction.

7. An electric machine according to claim 1 or 2 and 6, characterised in that the vertically standing, s-shaped deflectors (52) extend from the cooling gas through-flow surface of the heat exchangers (13), (14) to the cover face (12) of the housing (9).

EP 0 299 908 B1

FIG 1

FIG 2

FIG 3

FIG 4

FIG 5

FIG 6